(19) Europäisches Patentamt / European Patent Office / Office européen des brevets

(11) **EP 2 579 258 A1**

(12) **EUROPEAN PATENT APPLICATION**

(43) Date of publication:
**10.04.2013 Bulletin 2013/15**

(21) Application number: **11306284.8**

(22) Date of filing: **04.10.2011**

(51) Int Cl.:
*G11B 27/10* (2006.01)     *G11B 27/28* (2006.01)
*G06F 17/30* (2006.01)     *G06K 9/64* (2006.01)
*G06T 7/00* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Montalvo, Luis**
  **35576 Cesson-Sévigné (FR)**

• **Straub, Gilles**
  **35576 Cesson-Sévigné (FR)**
• **Gendrot, Rémy**
  **35576 Cesson-Sévigné (FR)**

(74) Representative: **Perrot, Sébastien**
**Technicolor**
**1-5 rue Jeanne d'Arc**
**92130 Issy Les Moulineaux (FR)**

(54) **Method of automatic management of a collection of images and corresponding device**

(57)     The present invention relates to the field of management of image data in data storage. In particular, the present invention relates to a method and device for automatic detection of correspondence between images in data storage and corresponding device, which method and device are particularly efficient with regard to the automatic management of large amounts of dispersed image data.

Fig. 2

EP 2 579 258 A1

**Description**

**1. Field of invention.**

The present invention relates to the field of management of image data in data storage. In particular, the present invention relates to a method and device for automatic detection of duplicate images in data storage and corresponding device, which method and device are particularly efficient with regard to the automatic management of large amounts of dispersed image data.

**2. Technical background.**

The proliferation of digital devices that comprise a photo camera has favored an explosion of the volume of image data stored by a user, and it is quite easy for a user to end up with many image duplicates in the user's image library.
This situation can be even worse in the case of a home network environment, where several users can add images to an image library, the library possibly being physically distributed on several, dispersed storage devices, for example on hard drives of different PCs, on a NAS (Network Attached Storage), on USB keys, etc.).
The reasons why an image library can end up by containing many duplicate images are diverse. Unintentional duplicate images are produced through copy actions. For example, a user who organizes photos in different directories does not move the photos, which would have been appropriate, but unintentionally rather copies them; a user that wishes to transfer photos via e-mail adapts the photo resolution for including them in his e-mail but unintentionally keeps the low-resolution copies; a user that views images with a viewer application modifies these by rotation, or modification of color and contrast and unintentionally keeps the unmodified copy in addition to the modified copy. Other copy actions are intentional and are due to the fact that the user has no longer an overview of the data that he has stored, a situation that is getting worse when the user has multiple storage devices and many images, and gets even worse when multiple users add and copy data to the multitude of images stored. The user, knowing that he does not have a clear overview of the images stored, worsens this situation by preferring finally to copy rather than to move or replace images, by fear of deleting them. This creates a situation where the user no longer knows which images are disposable copies and which are not.
In all these scenarios, a duplicate detection tool can be necessary, or at least useful, to assist the user with the cleanup or management tasks of the user's image library.
Prior-art detection of image duplicates detects duplicates according to criteria such as checksum data, creation data, file name, file size, and image format. Such criteria allows only detection of identical copies of an original image but not the copies that have been slightly or largely modified in order to enhance the visual perception of the image on a particular display. Moreover, if more than one criterion for the duplicates detection is specified, duplicates are detected that comply with any of the selected criteria and user intervention is needed to determine if the user wishes to delete the detected duplicates from the image library. Other duplicate detection methods are capable to detect near-duplicate images by comparing image pixel data. A user is required to specify a matching percentage of pixel data of two images to mark and detect an image as being a duplicate image. The detection then detects these near-duplicates as it detects strictly identical images without distinction.
Thus, prior art solutions can still be optimized with regard to detection of duplicate images in data storage. Notably, a method is needed that reduces user intervention to the strictly needed.

**3. Summary of the invention.**

The invention reduces the complexity of maintaining a collection of images.
When near duplicates are found according to the method of the invention, associated metadata resumes the reason why these are considered as being duplicates (exact, near, far), for example low resolution copy, zoom, copy stored in a backup zone, etc. A set of management action rules that are associated to this metadata then allows managing the image library automatically according to these management action rules. Automatic management actions are taken for images which are considered as corresponding by the method of the invention based on the discussed metadata and associated rules. These management actions are for example delete, keep, or replace-by-link to the original image. The latter option can be required when the existence of identical copies is to be avoided for reasons of efficiency.
The discussed advantages and other advantages not mentioned here, that make the device and method of the invention advantageously well suited for automatic management of a collection of images, will become clear through the detailed description of the invention that follows.
In order to automatically manage a collection of images, the invention proposes a method comprising a step of detection of correspondence between a first image and at least a second image in the collection of images according to at least one criterion for correspondence between the first image and the at least one second image, and a step of association of metadata to the at least a second image when the correspondence is detected, the metadata being representative of a relation between the first image and the at least one second image and comprising the at least one criterion for correspondence between the first image and the at least one second image which has lead to the detection of correspondence.

According to a variant embodiment of the invention, the method further comprises a step of automatic determination and application of one of a set of predetermined actions for processing of the at least one second image according to the associated metadata.

According to a variant embodiment of the invention, the metadata further comprises information representative of a level of correspondence between the first image and the at least one second image.

According to a variant embodiment of the invention, the set of predetermined actions comprise an action of replacement of the at least one second image with a link to the first image.

According to a variant embodiment of the invention, the set of predetermined actions comprise an action of deletion of the at least one second image.

According to a variant embodiment of the invention, the set of predetermined actions comprise an action of transferring the at least one second image to a storage.

According to a variant embodiment of the invention, the set of predetermined actions comprise an action of renaming the at least one second image.

The invention also concerns a device for automatic management of a collection of images, the device comprising means for detection of correspondence between a first image and at least a second image in the collection of images according to at least one criterion for correspondence between the first image and the at least one second image, and means for association of metadata to the at least one second image when the correspondence is detected, the metadata being representative of a relation between the first image and the at least one second image and comprising the at least one criterion for correspondence between the first image and the at least one second image which has lead to the detection of correspondence.

## 4. List of figures.

More advantages of the invention will appear through the description of particular, non-restricting embodiments of the invention. The embodiments will be described with reference to the following figures:

**Figure 1** shows a method for association of metadata to one or more images when a correspondence is detected.
**Figure 2** shows a detection of correspondence according to a variant embodiment of the invention.
**Figure 3** shows an application of actions associated to the detection according to the invention.
**Figure 4** illustrates the notion of normalized fingerprint distance (NFD) between two images and the relation between NFD and discussed thresholds.
**Figure 5** shows an example device implementing a variant embodiment of the invention.

## 5. Detailed description of the invention.

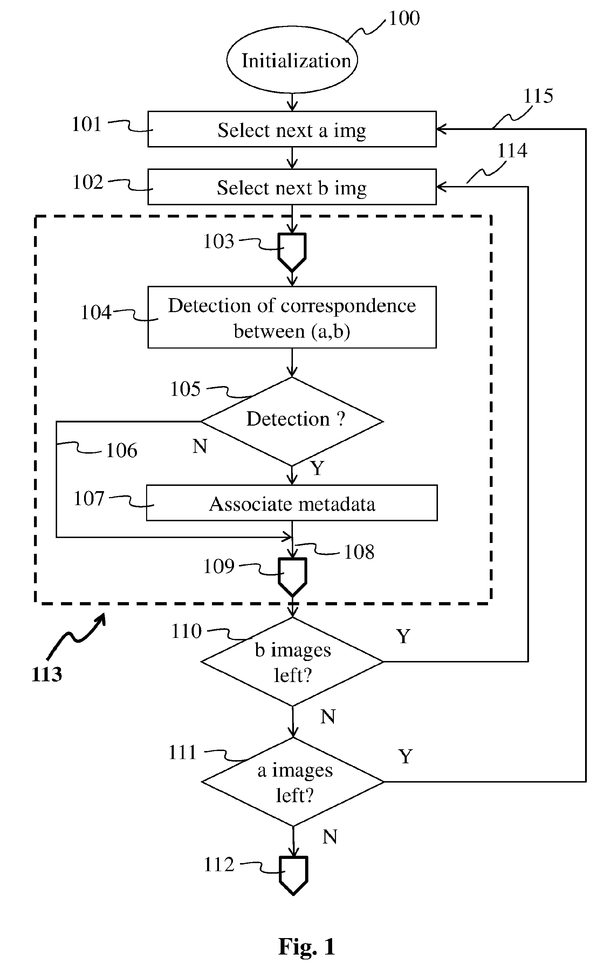

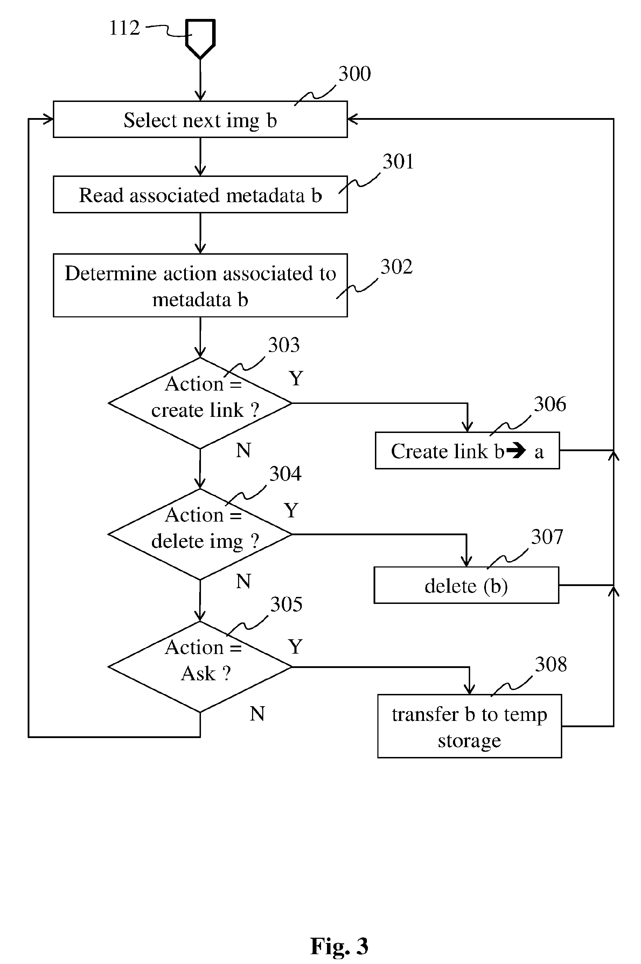

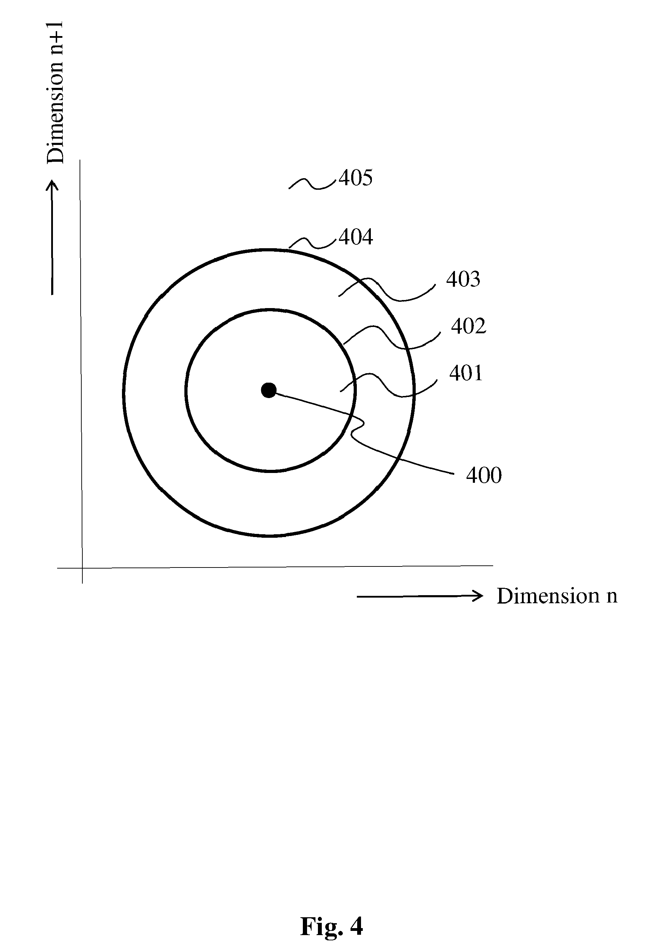

**Figure 1** shows a method for association of metadata to one or more images when a correspondence is detected.
In a first initialization step 100, variables are initialized for the functioning of the method. When the method is implemented in a device such as device 400 of figure 4, this may comprise copying of data from non-volatile memory to volatile memory and initialization of memory. In a next step 101, a first image, "a", is fetched in data storage. In a next step 102, a second image, "b", is fetched from data storage. In a step 104, a detection of correspondence between the two images is done according to different criteria. In a test step 105, it is determined if such detection is affirmative (i.e. a correspondence between the two images is detected according to one or more of the criteria for correspondence) or not. If the detection is affirmative, metadata is associated to the second image in a step 107. This metadata comprises information on a relation between the second and the first image and information about the one or more criteria of correspondence that has lead to the detection of the correspondence. When no correspondence can be detected, step 107 is not executed. In a next step 110, it is verified if there are any second ("b") image left that have not been compared to the "a" image. If so, a next second ("b") image is selected in step 102 and the steps of detection (dotted rectangle 113) are repeated. If not, it is verified in a step 111 if there are any first images ("a") left which have not yet been processed by the detection method of the invention. If so, a next first ("a") image is selected in step 101, a next second "b" image is selected in step 102 and the steps of detection (113) are repeated. If all first "a" images of the image collection in data storage have been processed by the method of the invention, point 112 is reached, which links the detection method of the invention to an automatic determination and application of one of a set of predetermined actions for processing of all second images ("b" images) according to the associated metadata, described by means of figure 3. According to the described embodiment, the images in the data storage are first completely processed by the detection method, before being processed by the automatic determination and application of predetermined actions. According to a variant embodiment, the latter automatic determination is done immediately following the discussed association of metadata. This variant has an advantage in processing time because the mass of images to be processed by the detection method can be reduced; each time when images that are deleted by delete actions the mass of images to process is reduced. An intelligent selection method for first ("a") and second "b" images can further reduce the processing time needed. For example, a step is added to the method that excludes detection of correspondence of two images that have already been passed through the detection process. According to this variant, the detection method associates metadata to each image that has been completely processed by the detection process which metadata indicates that the image has already been processed as a first "a" image, and in each next iteration of the detection method where a next first "a" image is selected, already processed first "a" images are not being processed in the detection method again, i.e. they are not selected as second ("b") images.

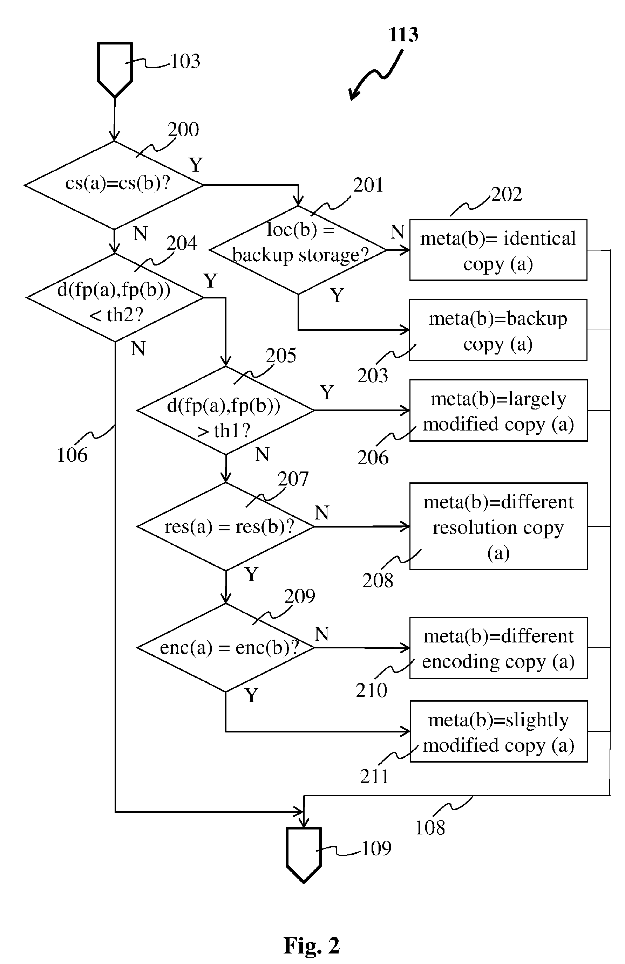

**Figure 2** shows a detection of correspondence according to a particular embodiment of the invention. The method starts at point 103 and ends at point 109 and corresponds to a detailed view of the detection method 113 of figure 1. Variant embodiments of the method of the invention are possible. Notably the steps of the method can be executed in a different order; more or less criteria (and thus tests) can be added to /removed from the detection of correspondence while still using the method of automatic management of a collection of images according to the invention.

In a first test step 200, it is determined if a checksum calculated over the first ("a") image is the same as a checksum calculated over the second ("b") image. Checksum calculation is done through known methods, such as SHA (Secure Hash Algorithm) or MD5 (Message Digest 5). If the calculated checksum is the same, the two images are considered as being identical and a decisional step 201 is done, in which it is determined if the location where the second ("b") image is stored is a location for storage of backup. If so, metadata is added in step 203 to the identical second ("b") image that indicates that the second image is a backup copy of the first image. If not, metadata is added in step 202 to the identical second image that indicates that the second image is an identical copy. As will be handled further on, it is possible to automatically delete identical images that are not backup copies by execution of actions associated to metadata. If, as an outcome of test step 200 it is on the contrary determined that the checksums of the first and the second images are different, a test step 204 is executed, in which it is determined if a normalized distance d between fingerprints of the first "a" image fp(a) and of the second "b" image fp(b) is below a first threshold th2 $d(fp(a),fp(b)) < th2$; th2 is a threshold that is chosen such that if $d(fp(a),fp(b)) < th2$, the second image "b" can be considered as being a modified copy of the first image "a". If $d(fp(a),fp(b))$ is not inferior to th2, the first and the second images are considered as being different by the method of the invention and the method continues with step 109. But if $d(fp(a),fp(b))$ is inferior to th2, we are dealing with a modified copy and it can be determined in following steps how the difference between the two images can be characterized. Notably, in a next step 205, the previously calculated normalized fingerprint distance is compared with a next threshold th1. If $d(fp(a),fp(b))$ is superior to th1, the second image "b" is characterized in a step 206 as being a largely modified copy of the first image "a" and corresponding metadata is associated to the second image for example according to table 1, first row (LMC, <path>/a). If on the contrary $d(fp(a),fp(b))$ is inferior to th1, a test step 207 is executed, in which it is verified if the first image ("a") has the same resolution as the second image "b". Image resolution can be compared based on prior-art file metadata that is present in prior-art file systems, such as EXIF (Exchangeable Image File Format). If the image resolutions differ, a step 208 is executed in which metadata is associated to the second image that indicates that the second image is a different resolution copy of the first image; e.g. a tag 'DRC' is added to metadata associated to image b together with the storage path of image a: (DRC, <path>/a). If on the contrary the resolution of the first image differs from that of the second image, a next test step 209 is executed, in which the encoding methods of the two images are compared. This comparison is done according to known methods as for example by comparing file extensions (e.g. *.jpg, *.tiff). If the two images are encoded with a different encoding method, a step 210 is executed in which corresponding metadata is associated to the second image, e.g. a tag 'DEC' is added to image b together with the storage path of image a: (DEC, <path>/a). If on the contrary the two images are encoded with different encoding methods, step 211 is executed in which metadata (SMC, <path/a>) is associated to the second image. After steps 202, 203, 206, 208, 210 and 211, step 109 is executed, returning to figure 1, where the steps of the method are iterated until all images have been processed. **Table 1** hereunder resumes example types of metadata tags, their meaning and their means of determination.

**Table 1**

| Tag | Meaning | Means for determination |
|---|---|---|
| IDC | Image 'b' is an Identical Copy of image 'a' | Checksum |
| BC | Image 'b' is a Backup Copy of image 'a' | Checksum and storage location |
| LMC | Image 'b' is a Largely Modified Copy of image 'a' | Normalized image fingerprint distance (th1 < NFD < th2) |

(continued)

| Tag | Meaning | Means for determination |
|-----|---------|-------------------------|
| DRC | Image 'b' is a Different Resolution Copy of image 'a' | Image resolution |
| DEC | Image 'b' is a Different Encoding Copy of image 'a' | Image encoding method |
| SMC | Image 'b' is a Slightly Modified Copy of image 'a' | Normalized image fingerprint distance (NFD < th1) |

**Figure 3** shows an application of actions associated to the detection according to an example embodiment of the invention. According to a variant embodiment of the invention as illustrated in figure 3, these actions are done following the execution of the detection steps of figs 1 and 2 (see pointer 112 in figs 1 and 3). According to yet another variant embodiment, actions are executed as soon as metadata has been associated to an image, which is advantageous in terms of resources used for execution of the method. This latter variant is possible for actions that are not delete actions, such as actions creating a link, the creation of the link reduces the amount of data to be processed by subsequent iterations of the method.

In a first step 300, a next second image is chosen ("b" image). Its associated metadata is read in step 301 and in a step 302 an action is determined for the associated metadata, for example, according to the actions as defined in table 3. In a test 303, it is determined if the action associated to the metadata is the creation of a file link. If so, a file link is created in a step 306, from the second image to the first image. The metadata remains associated to the link, so that for future iterations of the method of the invention, a trace is kept. If the action is not a create link, it is verified in a test 304 if the action is a delete image; if so, the second image is deleted in a step 307. If the action is not a delete image action neither, it is verified in a test 305 if the action is an ask action, and if so, the second image is transferred to a temporary storage in a step 308, where images are stored for which a user decision is needed. If not, the action steps are repeated with a selection of a next second image in step 300. This is also the case after steps 306, 307 and 308. The processing ends when all images have been processed.

Variant embodiments of the discussed application of actions are possible. Notably the steps of the method can be executed in a different order; more or less actions (and thus tests) can be added/removed.

The method of the invention can be applied as a background task or as a clean-up tool that is more or less regularly executed. The method can be enhanced with a monitoring feature that monitors creation, deletion and copying of images so as to keep the metadata updated as soon as a creation, deletion or copying is executed.

**Table 2** hereunder illustrates an example lookup table for looking up actions that are associated to a tag type. The tags types are those of the example implementation illustrated by means of figures 1 and 2. For a tag type 'IDC' (identical Copy) the associated action executed by the method of the invention is to replace the second image ("b") by a link to the first image ("a"). When a second image has a metadata tag BC or LMC, no action is associated since it is wished to keep the second image. When the second image has a tag 'DRC', the associated action is to delete the second image only when the second image has a lower resolution than the first image. When the second image has an associated metadata tag 'DEC', the associated action is to delete the second image only if the first image is of the 'png' encoding type. When the second image has an associated tag 'SMC', the associated action is to ask the user to decide what to do. According to a variant embodiment of the invention, images with associated action 'Ask' are grouped in temporary storage and the user is only bothered once for a review of all images in this temporary storage with associated action 'Ask' for which the user's decision is required. Such a review can for example be done through a visual presentation of the corresponding first and second images image pair and with a possibility for un-checking a 'keep' checkbox related to each second image of the image pair.

According to a variant embodiment of the invention, multiple metadata tags can be associated to a single image. For example, a same image can have both DRC and DEC tags, meaning that the image is a different resolution copy but also a different encoding copy. In this case, the steps of the method are not executed as depicted in figure 2, but in parallel or in a different order. This variant embodiment has the advantage to allow a more extensive association of metadata, which is advantageous for fine-tuning of the associated actions. Using the previous example of an image that has both DRC and DEC tags and referring to table 2, an associated action is to only delete the image if both action conditions apply, i.e. to delete the second image the resolution of the second must be lesser than that of the first image AND the first image is encoded according to the PNG (Portable Network Graphics) encoding method.

According to a variant embodiment of the invention, the actions are user-configurable.

**Table 2**

| Tag | Action |
|-----|--------|
| IDC | Replace b by link to a |

(continued)

| Tag | Action |
|-----|--------|
| BC | None |
| LMC | None |
| DRC | Delete b if res(b) < res (a) |
| DEC | Delete b if enc(a)=*.png |
| SMC | Ask |

**Figure 4** illustrates the notion of normalized fingerprint distance (NFD) between two images and the relation between NFD and discussed thresholds. To be able to classify an image by its differences with another image, NFD is one of the 'tools' used by the method. Two fixed thresholds (th1 and th2) are used representing certain values of normalized distances between fingerprint vectors of the second ('b') image and the first ('a') image. This normalized distance can be expressed as:

$$\Delta(a, b) = \frac{\|a - b\|}{\|a + b\|}$$

Where $\|.\|$ represents an L2 norm of a vector, i.e. its Euclidian distance.

An image fingerprint, constructed according to known prior-art methods, can be represented as an n-dimensional vector. "n" can have a value of hundred or even thousand. In our example and for simplicity of illustration, we assume that n=2. The center of fig.4 (400) represents the image fingerprint of image 'a', i.e. fp(a). The zone 401 in the first circle around fp(a) corresponds to the fingerprints of the 'b' images whose distance to the fingerprint of the 'a' image is lower than the first threshold th1 (402), and represents 'b' images that have been slightly modified with regard to the 'a' image. Zone 403 in the second circle around fp(a) corresponds to fingerprints of 'b' images whose distance to the fingerprint of the 'a' image is higher than the first threshold th1 (402) but lower than the second threshold th2 (404), and represents 'b' images that have been largely modified with regard to the 'a' image. The zone 405 outside of the second circle corresponds to fingerprints of 'b' images whose distance to the fingerprint of the 'a' image is higher than the second threshold th2 (404), and represents 'b' images that can be considered to be different with regard to the 'a' image.

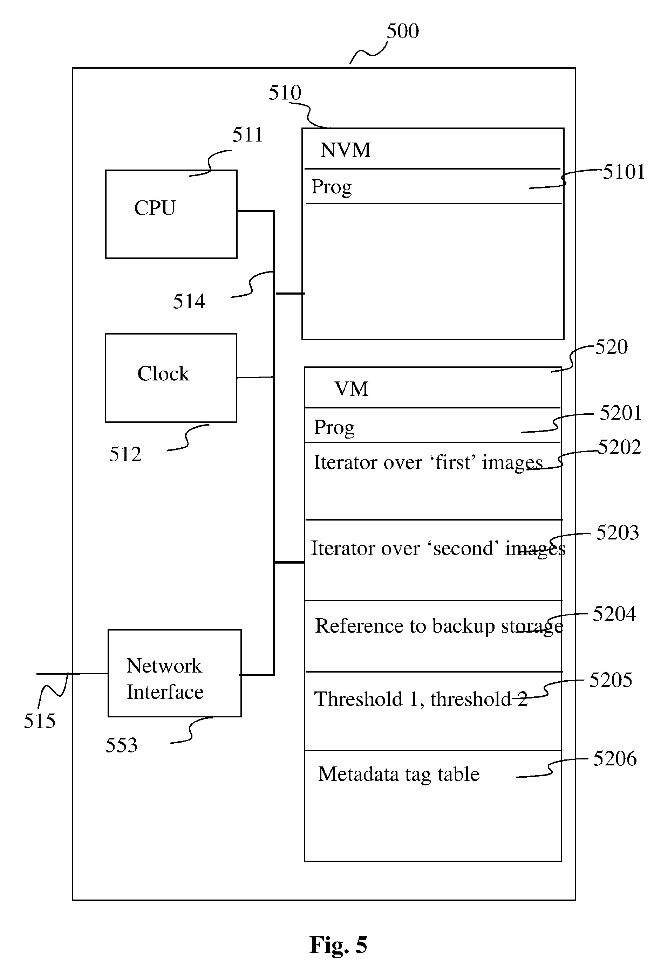

**Figure 5** shows an example device 500 that implements a variant of the method of the invention. The device 500 comprises the following components, interconnected by a digital data- and address bus 514:

- a processing unit 511 (or CPU for Central Processing Unit);
- a non-volatile memory NVM 510 ;
- a volatile memory VM 520 ;
- a clock 512, providing a reference clock signal for synchronization of operations between the components of the device 500 and for timing purposes;
- a network interface 513, for interconnection of device 500 to other devices connected in a network via connection 515.

It is noted that the word "register" used in the description of memories 510 and 520 designates in each of the mentioned memories, a low-capacity memory zone capable of storing some binary data, as well as a high-capacity memory zone, capable of storing an executable program, or a whole data set.

Processing unit 511 can be implemented as a microprocessor, a custom chip, a dedicated (micro-) controller, and so on. Non-volatile memory NVM 510 can be implemented in any form of non-volatile memory, such as a hard disk, non-volatile random-access memory, EPROM (Erasable Programmable ROM), and so on.

The Non-volatile memory NVM 510 comprises notably a register 5201 that holds a program representing an executable program comprising the method according to the invention. When powered up, the processing unit 511 loads the instructions comprised in NVM register 5101, copies them to VM register 5201, and executes them.

The VM memory 520 comprises notably:

- a register 5201 comprising a copy of the program 'prog' of NVM register 5101 ;
- a register 5202 comprising an iterator variable allowing an iteration over the first ('a') images;
- a register 5203 comprising an iterator variable allowing an iteration over the second ('b') images;

- a register 5204 for storing of one or more references to backup storage, so that the method can recognize when a storage location is a backup storage location;
- a register 5205 for storing of the first and the second thresholds for NFD calculation;
- a register 5206 holding a table of metadata tags that is to be used for association of metadata.

A device such as device 500 is suited for implementing the method of the invention of automatic management of a collection of images, the device comprising

- means for detection (CPU 511, VM register 5205) of correspondence between a first image and a second image(s) in said collection of images according to a criterion(s) for correspondence between said first image and the second image(s);
- means for association of metadata (CPU 511, register 5206) to the second image(s) when said correspondence is detected, the metadata being representative of a relation between the first image and the second image(s) and comprising the criterion(s) for correspondence between the first image and the second image(s) which has lead to the detection of the correspondence.

Other device architectures than illustrated by fig 5 are possible and compatible with the method of the invention. Notably, according to variant embodiments, the invention is implemented as a pure hardware implementation, for example in the form of a dedicated component (for example in an ASIC, FPGA or VLSI, respectively meaning Application Specific Integrated Circuit, Field-Programmable Gate Array and Very Large Scale Integration), or in the form of multiple electronic components integrated in a device or in the form of a mix of hardware and software components, for example a dedicated electronic card in a personal computer.

**Claims**

1.  Method of automatic management of a collection of images, **characterized in that** it comprises:

    - a step of detection (104) of correspondence between a first image and at least a second image in said collection of images according to at least one criterion for correspondence between said first image and said at least one second image;
    - association of metadata (107) to said at least a second image when said correspondence is detected, said metadata being representative of a relation between said first image and said at least one second image and comprising said at least one criterion for correspondence between said first image and said at least one second image which has lead to said detection of correspondence.

2.  Method according to Claim 1, **characterized in that** it further comprises a step of automatic determination and application of one of a set of predetermined actions for processing of said at least one second image according to said associated metadata.

3.  Method according to Claim 1 or Claim 2, **characterized in that** said metadata further comprises information representative of a level of correspondence between said first image and said at least one second image.

4.  Method according to any of Claims 2 to 3, **characterized in that** said set of predetermined actions comprise an action of replacement of said at least one second image with a link to said first image.

5.  Method according to any of Claims 2 to 4, **characterized in that** said set of predetermined actions comprise an action of deletion of said at least one second image.

6.  Method according to any of Claims 2 to 5, **characterized in that** said set of predetermined actions comprise an action of transferring said at least one second image to a storage.

7.  Method according to any of claims 2 to 6, **characterized in that** said set of predetermined actions comprise an action of renaming said at least one second image.

8.  A device for automatic management of a collection of images, the device comprising

    - means for detection (511, 5205) of correspondence between a first image and at least a second image in said collection of images according to at least one criterion for correspondence between said first image and said at least one second image;
- means for association of metadata (511, 5206) to said at least one second image when said correspondence is detected, said metadata being representative of a relation between said first image and said at least one second image and comprising the at least one criterion for correspondence between said first image and said at least one second image which has lead to said detection of correspondence.

100

Initialization

101 — Select next a img ← 115

102 — Select next b img ← 114

103

104 — Detection of correspondence between (a,b)

105 — Detection ?

106 — N    Y

107 — Associate metadata

108

109

113

110 — b images left?    Y

N

111 — a images left?    Y

N

112

**Fig. 1**

**113**

**Fig. 2**

112

300

Select next img b

301

Read associated metadata b

302

Determine action associated to
metadata b

303

Action =
create link ?

Y

306

Create link b→ a

N

304

Action =
delete img ?

Y

307

delete (b)

N

305

Action =
Ask ?

Y

308

transfer b to temp
storage

N

**Fig. 3**

**Fig. 4**

500

510

511

CPU

514

Clock

512

Network
Interface

515

553

NVM

Prog

5101

520

VM

Prog 5201

Iterator over 'first' images 5202

Iterator over 'second' images 5203

Reference to backup storage 5204

Threshold 1, threshold 2 5205

Metadata tag table 5206

**Fig. 5**

Europäisches
Patentamt

European
Patent Office

Office européen
des brevets

# EUROPEAN SEARCH REPORT

**Application Number**

EP 11 30 6284

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/065045 A1 (IWASAKI MASAJIRO [JP]) 22 March 2007 (2007-03-22)<br>* figure 5 *<br>* paragraphs [0050] - [0058] *<br>* paragraphs [0068] - [0071] *<br>* paragraph [0085] * | 1-8 | INV.<br>G11B27/10<br>G11B27/28<br>G06F17/30<br>G06K9/64<br>G06T7/00 |
| X | US 2007/260639 A1 (TOBIN KENNETH W [US] ET AL TOBIN KENNETH WILLIAM [US] ET AL) 8 November 2007 (2007-11-08)<br>* paragraphs [0022], [0031], [0040], [0041] * | 1-8 | |
| X | EP 2 120 162 A1 (RICOH KK [JP]) 18 November 2009 (2009-11-18)<br>* figures 5-11 *<br>* paragraphs [0025], [0034] - [0041] *<br>* paragraphs [0047] - [0050] * | 1,3,8 | |
| X | WO 2005/065283 A2 (WALKER DIGITAL LLC [US]; WALKER JAY S [US]; JORASCH JAMES A [US]; SAMM) 21 July 2005 (2005-07-21)<br>* figures 11,15,16 *<br>* paragraphs [0119], [0129] *<br>* paragraphs [0282], [0332] * | 1-8 | TECHNICAL FIELDS SEARCHED (IPC)<br><br>G11B<br>G06F<br>G06K<br>G06T |
| X | US 2007/216709 A1 (KOJIMA TAMAKI [JP] ET AL) 20 September 2007 (2007-09-20)<br>* figures 15-19, 33 *<br>* paragraphs [0115] - [0116] *<br>* paragraphs [0124] - [0125] *<br>* paragraphs [0200], [0215] * | 1,8 | |
| X | US 2010/166321 A1 (SAWANT NEELA [IN] ET AL) 1 July 2010 (2010-07-01)<br>* paragraphs [0002], [0004], [0007], [0037] * | 1,8 | |

-/--

The present search report has been drawn up for all claims

| Place of search | Date of completion of the search | Examiner |
|---|---|---|
| The Hague | 12 March 2012 | Doyle, Walter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**Europäisches Patentamt**
**European Patent Office**
**Office européen des brevets**

## EUROPEAN SEARCH REPORT

Application Number

EP 11 30 6284

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2006/030878 A1 (CANON KK [JP]; SHIMADA BUNGO [JP]) 23 March 2006 (2006-03-23) * the whole document * ----- | 1-8 | |

TECHNICAL FIELDS SEARCHED (IPC)

The present search report has been drawn up for all claims

| Place of search | Date of completion of the search | Examiner |
|---|---|---|
| The Hague | 12 March 2012 | Doyle, Walter |

EPO FORM 1503 03.82 (P04C01)

## ANNEX TO THE EUROPEAN SEARCH REPORT
## ON EUROPEAN PATENT APPLICATION NO.

EP 11 30 6284

This annex lists the patent family members relating to the patent documents cited in the above-mentioned European search report.
The members are as contained in the European Patent Office EDP file on
The European Patent Office is in no way liable for these particulars which are merely given for the purpose of information.

12-03-2012

| Patent document cited in search report | | Publication date | Patent family member(s) | | Publication date |
|---|---|---|---|---|---|
| US 2007065045 | A1 | 22-03-2007 | JP 4700452 B2<br>JP 2007080210 A<br>US 2007065045 A1 | | 15-06-2011<br>29-03-2007<br>22-03-2007 |
| US 2007260639 | A1 | 08-11-2007 | NONE | | |
| EP 2120162 | A1 | 18-11-2009 | EP 2120162 A1<br>JP 2009277155 A<br>US 2009285493 A1 | | 18-11-2009<br>26-11-2009<br>19-11-2009 |
| WO 2005065283 | A2 | 21-07-2005 | AU 2004311841 A1<br>CA 2554135 A1<br>EP 1704710 A2<br>JP 2007520934 A<br>JP 2010016847 A<br>US 2008192129 A1<br>US 2011128414 A1<br>WO 2005065283 A2 | | 21-07-2005<br>21-07-2005<br>27-09-2006<br>26-07-2007<br>21-01-2010<br>14-08-2008<br>02-06-2011<br>21-07-2005 |
| US 2007216709 | A1 | 20-09-2007 | CN 101013433 A<br>JP 2007206919 A<br>KR 20070079330 A<br>US 2007216709 A1 | | 08-08-2007<br>16-08-2007<br>06-08-2007<br>20-09-2007 |
| US 2010166321 | A1 | 01-07-2010 | NONE | | |
| WO 2006030878 | A1 | 23-03-2006 | JP 4541811 B2<br>JP 2006081119 A<br>US 2009002744 A1<br>US 2011255132 A1<br>WO 2006030878 A1 | | 08-09-2010<br>23-03-2006<br>01-01-2009<br>20-10-2011<br>23-03-2006 |

EPO FORM P0459

For more details about this annex : see Official Journal of the European Patent Office, No. 12/82